# EUROPEAN PATENT APPLICATION

(11) **EP 4 530 767 A1**
(43) Date of publication of application: **02.04.2025**
(21) Application number: 24197827.9
(22) Date of filing: 02.09.2024
(51) Int. Cl.: G05B 19/042, B60W 50/02, F02D 41/26

(54) **METHOD FOR ENGINE CONTROL AND MONITORING SYSTEM**

(30) Priority: 27.09.2023 GB 202314803
(71) Applicant: Rolls-Royce plc, London N1 9FX (GB)
(72) Inventor: Griffiths, Stuart A, Derby, DE24 8BJ (GB); Ahmed, Saim, Derby, DE24 8BJ (GB)
(74) Representative: Rolls-Royce plc

(57) **Abstract**

Methods for modifying an Engine Control and Monitoring System (ECaMS) for an engine. A method comprises identifying a provisioning deficit in the ECaMS, wherein the ECaMS comprises a first processor node and a second processor node. The first processor node comprises a first acquisition integrated circuit (IC), a first output IC, and a first processor. The second processor node comprises a second acquisition IC, a second output IC, and a second processor. The first acquisition IC is connected directly to the second acquisition IC. The method comprises connecting an expansion unit to the ECaMS. The expansion unit comprises one or more expansion unit ICs, said one or more expansion unit ICs being connected to one or more ICs of the ECaMS.

## Description

### TECHNICAL FIELD

The present disclosure relates to a method for modifying an Engine Control and Monitoring System (ECaMS) for an engine, in particular to an ECaMS comprising first and second processor nodes.

### BACKGROUND

Most engines used in vehicles include systems to monitor engine performance and/or adjust parameters within the engine; these systems are commonly referred to as ECaMS systems. By way of example, ECaMS systems may be included in: aeronautical gas turbine engines; marine diesel engines; automotive petrol engines; marine gas turbine engines, and so on.

For more complex engines, and particularly where the continued performance of the engine without unscheduled interruptions or failures is safety critical, the ECaMS may comprise a Control and Optimising System (CnOS) and a Monitoring and Optimisation System (MnOS). Taking the example of an engine intended for use with an aeroplane (such as an aeronautical gas turbine engine) the CnOS may be used to control flight operations to regulate the engine performance in flight (by way of example, to adjust variable stator vanes angles or control fuel flow rates) and the MnOS may be used to store data for improving engine performance after flights, including data used to guide maintenance operation (for example fan balancing which typically requires adjusting screws in an engine). Further, where a CnOS and MnOS are both present in an ECaMS, the two systems may be effectively segregated from one another, such that engine control and engine protection functions do not interact and issues with (less critical) control systems are less likely to impact (more critical) protection systems. Segregation may include, for example, using separate physical sensors for the two systems, wherein the sensors may be located in similar locations.

It is desirable to provide ECaMS having increased adaptability and versatility.

### BRIEF SUMMARY

An embodiment provides a method for modifying an Engine Control and Monitoring System (ECaMS) for an engine. The ECaMS comprises a first processor node and a second processor node. The first processor node comprises a first acquisition integrated circuit (IC), a first output IC, and a first processor. The second processor node comprises a second acquisition IC, a second output IC, and a second processor. The first acquisition IC is connected directly to the second acquisition IC. The method comprises identifying a provisioning deficit in the ECaMS. The method further comprises connecting an expansion unit to the ECaMS. The expansion unit comprises one or more expansion unit ICs, said one or more expansion unit ICs being connected to one or more ICs of the ECaMS.

In some embodiments, the ECaMS may further comprise a third processor node and a fourth processor node, wherein the third processor node comprises a third acquisition IC, a third output IC, and a third processor, and the fourth processor node comprises a fourth acquisition IC, a fourth output IC, and a fourth processor. The first acquisition IC, second acquisition IC, third acquisition IC and fourth acquisition IC may be connected via a ring network.

In some embodiments where the ECaMS uses a ring network, an expansion unit may be connected to the ECaMS as a spur to the ring network. Additionally or alternatively, an expansion unit may be connected to the ECaMS as a node within the ring network.

In some embodiments, a first portion of the processor nodes comprising at least one processor node may provide control functionality, and a second portion of the processor nodes comprising at least one processor node may provide protection functionality. Further, the first portion of the processor nodes may be segregated from the second portion of the processor nodes. An expansion unit may be connected in such a way as to be directly connected to only one of the portions of the processor nodes. The expansion unit may be connected to either the first portion of the processor nodes or the second portion of the processor nodes.

Methods according to some embodiments may be performed on ECaMS that are installed on engines. The engines may be aeronautical gas turbine engines; marine diesel engines; automotive petrol engines; or naval gas turbine engines.

The skilled person will appreciate that except where mutually exclusive, a feature described in relation to any one of the above aspects may be applied mutatis mutandis to any other aspect. Furthermore, except where mutually exclusive, any feature described herein may be applied to any aspect and/or combined with any other feature described herein.

### BRIEF DESCRIPTION OF DRAWINGS

Embodiments will now be described by way of example only, with reference to the Figures, in which:
Fig. 1 is a schematic diagram of an ECaMS for an engine, in accordance with embodiments;
Fig. 2 is an example of an engine in accordance with embodiments;
Fig. 3A is a schematic diagram of an ECaMS that includes a ring network, in accordance with embodiments;
Fig. 3B is a schematic diagram of the ECaMS from Figure 3A, wherein a method for modifying ECaMS in accordance with embodiments has been performed;
Fig. 4 is a flowchart of a method in accordance with embodiments;
Fig. 5A is a schematic diagram of connections within an ECaMS according to some embodiments; and
Fig. 5B and Fig. 5C are schematic diagrams the Fig. 5A ECaMS following the addition of expansion units according to some embodiments.

### DETAILED DESCRIPTION

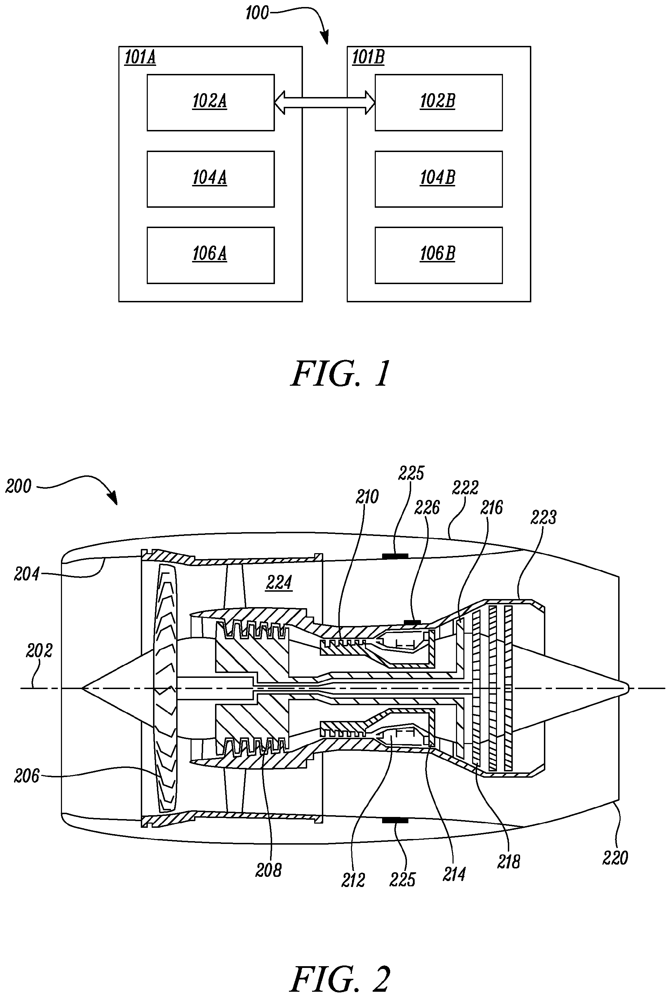

**Figure. 1** is a schematic diagram of an ECaMS 100 for an engine, in accordance with embodiments. As shown in Figure 1, the ECaMS includes a first processor node 101A and a second processor node 101B. The first processor node comprises a first acquisition integrated circuit (IC) 102A, a first output IC 104A and a first processor 106A. Equivalently, the second processor node 101B includes second acquisition IC 102B, output IC 104B and processor 106B. The first acquisition IC is connected directly to the second acquisition IC; this direct connection may comprise a wired connection, a wireless link or a combination of wired and wireless connection. In some embodiments, output ICs of the first and second processor nodes may also be directly connected. The ECaMS 100 as shown in Figure 1 uses what may be referred to as a distributed ECaMS architecture, in which the functions of the ECaMS are split across the processor nodes. The processors within a given processor node may be connected directly only to components within that processor node, for example, the acquisition IC and/or output IC, and may not have direct connections to components outside the processor node. The term "direct" is used when referring to connections between two given components to mean that the connection (which may be wired or wireless) does not include any further components other than those used to effect the connection such as wires, plugs, sockets, isolators, circuit conditioning components and lightning strike protection; that is, there are no further components located between the two given components that may receive, alter, and/or retransmit signals passing along the connection.

In accordance with embodiments, the capabilities of the ECaMS as illustrated by Figure 1 may be altered (for example, expanded) as necessary depending on the requirements of the engine into which the ECaMS is installed. As a consequence of the direct connections between processor nodes being made via the acquisition ICs, rather than between the processors of the processor nodes, additional nodes can be added into the system to provide additional processing capability, I/O capability, and so on without requiring substantial software changes and with reduced rewiring. In embodiments, the ECaMS could be expanded by connection of one or more expansion units, for example further node(s) providing additional I/O capability or specific I/O capabilities as required for a particular implementation.

Embodiments include methods performed on engines comprising ECaMS as discussed herein, for example: aeronautical gas turbine engines; marine diesel engines; automotive petrol engines; and/or marine gas turbine engines. **Figure 2** is an example of an engine 200 in accordance with embodiments that comprises turbines, specifically an aeronautical gas turbine engine. An ECaMS 225 in accordance with embodiments is installed in the example engine 200; where installed in an aeronautical engine, the ECaMS may be an Electrical Engine Controller (EEC). The ECaMS 225 shown in Figure 2 is connected to a sensor 226. The engine 200 may be associated with an aircraft (e.g. mounted thereon, or configured to be mounted thereon) and configured to generate propulsive thrust and/or electrical energy for the aircraft.

In the example, the engine 200 has a principal rotational axis 202. The engine 200 comprises, in axial flow series, an air intake 204, a propulsive fan 206, an intermediate pressure compressor 208, a high-pressure compressor 210, combustion equipment 212, a high-pressure turbine 214, an intermediate pressure turbine 216, a low-pressure turbine 218 and an exhaust nozzle 220. A nacelle 222 generally surrounds the engine 200 and defines both the intake 204 and the exhaust nozzle 220. An internal support structure 223 surrounds the fan 206, compressors 208, 210, combustion equipment 212, and turbines 214, 216, 218.

Briefly, the engine 200 operates as follows: air entering the intake 204 is accelerated by the fan 206 to produce two air flows: a first air flow which passes into the intermediate pressure compressor 208 and a second air flow which passes through a bypass duct 224 to provide propulsive thrust. The intermediate pressure compressor 208 compresses the air flow directed into it before delivering that air to the high-pressure compressor 210 where further compression takes place.

The compressed air exhausted from the high-pressure compressor 210 is directed into the combustion equipment 212 where it is mixed with fuel and the mixture combusted. The resultant hot combustion products then expand through, and thereby drive the high, intermediate and low-pressure turbines 214, 216, 218 before being exhausted through the nozzle 220 to provide additional propulsive thrust. The high 214, intermediate 216 and low 218 pressure turbines drive respectively the high-pressure compressor 210, intermediate pressure compressor 208 and fan 206, each by suitable interconnecting shaft.

The ECaMS may be installed, for example, within the nacelle 222 and may be used to control and monitor various characteristics of the engine. Due to the relatively high complexity of the engine shown in Figure 2, the ECaMS may comprise additional processor nodes beyond the two illustrated in Figure 1. It will be appreciated that the engine 200 illustrated in Fig. 2 is by way of example only, and various alternatives are within the scope of the present disclosure. Some less complex engines, for example automotive engines, may include ECaMS comprising smaller numbers of processor nodes than may be included in the engine of Figure 2.

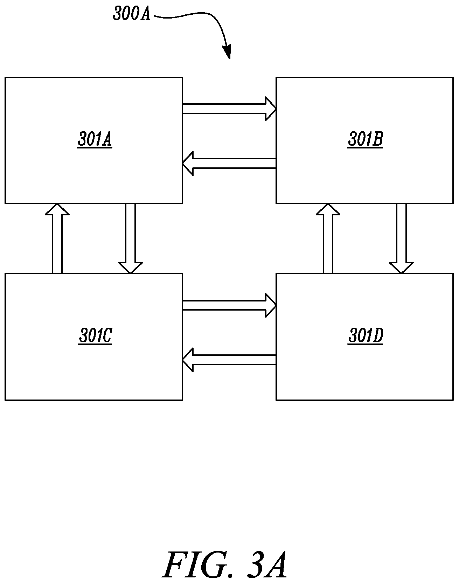

As discussed above, where the ECaMS includes first and second processor nodes, the acquisition ICs of the first and second processor nodes are connected directly to one another. In embodiments in which the ECaMS includes additional processor nodes (beyond the two processor nodes of the Figure 1 embodiment), additional connections are required between the processor nodes. Various schemes may be used for connecting plural processor nodes, for example, hub and spoke connection schemes. In some embodiments, the ECaMS may comprise a third processor node and a fourth processor node. The third processor node may comprise a third acquisition IC, a third output IC, and a third processor, and the fourth processor node may comprise a fourth acquisition IC, a fourth output IC, and a fourth processor. **Figure 3A** is a schematic diagram showing an example ECaMS in which the ECaMS 300A includes a first processor node 301A, second processor node 301B, third processor node 301C and fourth processor node 301D. The first acquisition IC, second acquisition IC, third acquisition IC and fourth acquisition IC of the respective processor nodes may be connected via a ring network. Embodiments may be particularly well suited where a ring network is used to connect plural processor nodes, due to the ease with which modifications may be made to the ECaMS if desired to accommodate changes in requirements.

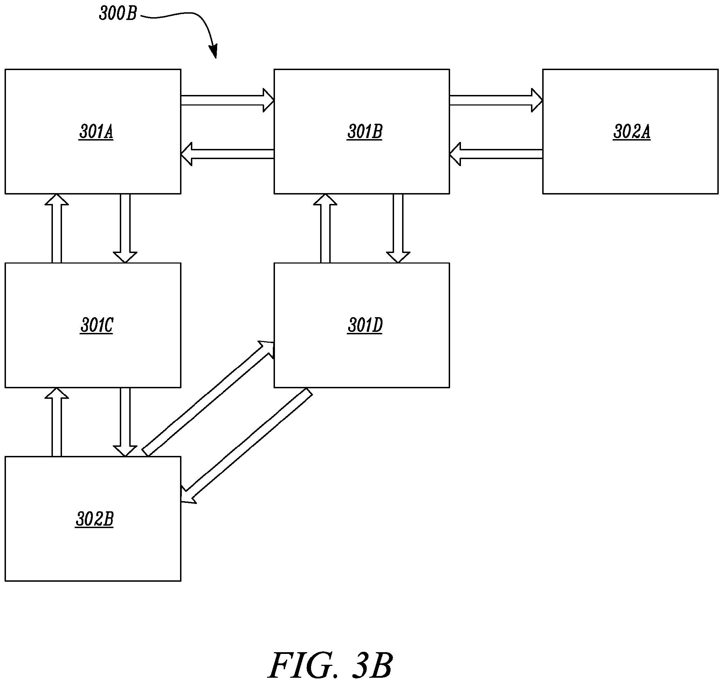

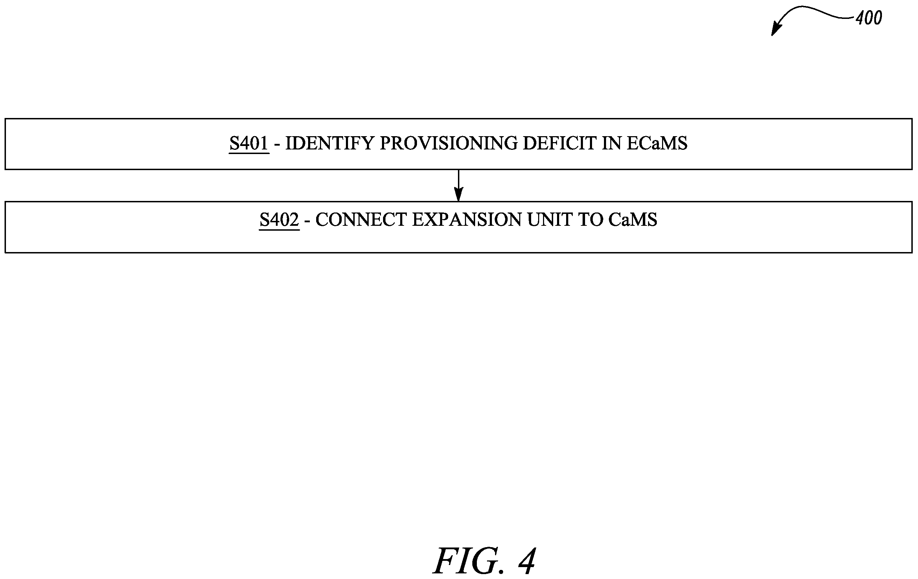

**Figure 3B** is a schematic diagram of the ECaMS of Figure 3A, wherein a method for modifying an ECaMS in accordance with embodiments has been performed on the ECaMS. A flowchart illustrating a method in accordance with embodiments is shown in **Figure 4****.** The Figure 4 method is used for ECaMS having a first processor node and a second processor node. The first processor node comprises a first acquisition integrated circuit (IC), a first output IC, and a first processor. The second processor node comprises a second acquisition IC, a second output IC, and a second processor. The first acquisition IC is connected directly to the second acquisition IC.

As shown in step S401 of Figure 4, the method comprises identifying a provisioning deficit in the ECaMS, that is, identifying that the ECaMS would be able to more effectively fulfil its role if provided with additional capabilities. The additional capabilities may be, for example, additional processing capacity, additional memory capacity, additional I/O connections, specific types of I/O connections that are not currently provided by the ECaMS, and so on. The identification of the provisioning deficit may be made by a human operator (for example, an operator or engineer responsible for an engine to which the ECaMS is or will be attached), or may be flagged automatically by software monitoring the ECaMS/engine/broader vehicle. By way of example, software may detect that generation of engine monitoring results is requiring an unduly long period of time (longer than a predetermined threshold) due to a deficit in processing capacity, and activate a corresponding warning flag to alert a user.

Subsequently to the identification of the provisioning deficit in the ECaMS, the method further comprises connecting one or more expansion units to the ECaMS, as shown in S402 of Figure 4. The (or each) expansion unit comprises one or more expansion unit ICs, said one or more expansion unit ICs being connected to one or more ICs of the ECaMS. In this way additional capabilities to address the identified ECaMS provisioning deficit may be provided.

The status of the ECaMS when the one or more expansion units are connected is largely determined by the timing at which the provisioning deficit is identified. In some embodiments, the provisioning deficit may be identified during the design (for example, prototyping) of an engine, in which case the one or more expansion units may be connected and integrated into the engine design before finalisation. As a further example, the provisioning deficit may be identified during maintenance or upgrading of an engine, in which instance the one or more expansion units may be connected to an ECaMS that has already been in operation, and potentially while the ECaMS is installed on an engine. The nature of the installation may depend on the type of engine: examples include an aeronautical gas turbine engine, a marine diesel engine; an automotive petrol engine; or a marine gas turbine engine. The connection of the one or more expansion units may then take place during scheduled engine maintenance or as a specific piece of maintenance, for example.

In some embodiments, the ECaMS (before the connection of one or more expansion units) comprises additional processor nodes, for example, a third processor node, a fourth processor node, and so on. Typically, each of the processor nodes comprises an acquisition IC, output IC and processor node. Figure 3A shows an example ECaMS in which the ECaMS 300A includes a first processor node 301A, second processor node 301B, third processor node 301C and fourth processor node 301D. In the Figure 3A example, the first acquisition IC, second acquisition IC, third acquisition IC and fourth acquisition IC of the respective processor nodes are connected via a ring network. Figure 3B shows the same example ECaMS following the execution of the Figure 4 method, that is, following the connection of expansion unit(s). The expanded ECaMS 300B in this example includes two expansion units 302. One of the expansion units 302A shown in Figure 3B is connected to the ECaMS as a spur to the ring network, such that the connecting of the expansion unit to the ECaMS comprises connecting one or more expansion unit ICs to one or more ICs within a single processor node of the ECaMS. In the Figure 3B example expansion unit 302A is connected to processor node 301B, such that signals between expansion unit 302A and the remainder of the ECaMS pass via processor node 301B. In some embodiments, the connecting may comprise connecting one or more expansion unit acquisition ICs to one or more acquisition ICs within the single processor node of the ECaMS. Additionally or alternatively, in some embodiments the connecting may comprise connecting one or more expansion unit output ICs to one or more output ICs within the single processor node of the ECaMS. In some embodiments, plural expansion units may be connected together in a chain type configuration, with ICs of the expansion units connected to one another and only a single expansion unit (at an end of the chain of expansion units) having a connection to a processor node of the ECaMS.

The other of the two expansion units 302B shown in Figure 3B is connected to the ECaMS as a node within the ring network, such that the connecting of the expansion unit to the ECaMS comprises connecting the one or more expansion unit ICs to ICs within two processor nodes of the ECaMS. In the Figure 3B example, expansion unit 302B is connected to processor nodes 301C and 301D. In some embodments where an expansion unit is connected as a node within a ring network, the connections between the processor nodes may be amended to take into account the expansion unit; continuing with the Figure 3B example the connection directly between processor nodes 301C and 301D may be removed. Alternatively, existing connections between processor nodes may be retained.
In some embodiments, the connecting may comprise connecting one or more expansion unit acquisition ICs to two or more acquisition ICs within two processor nodes of the ECaMS. Additionally or alternatively, in some embodiments the connecting may comprise connecting one or more expansion unit output ICs to two or more output ICs within two processor nodes of the ECaMS. In some embodiments, plural expansion units may be connected together in a chain type configuration, with ICs of the expansion units connected to one another and expansion units at each end of the chain of expansion units having connections to processor node of the ECaMS.

Additional processor nodes may be integrated into the ring network at any position in the ring. In some embodiments, the ring network may be a dual ring network comprising a clockwise ring and an anticlockwise ring; use of a dual ring network may provide an additional level of robustness to connection failures, allowing communications between nodes to be switched from a ring experiencing an issue to the other ring. Further, if a node within the ring becomes unavailable, communications may still be routed to every other node within the ring if a dual ring network is used. The example embodiments shown in Figures 3A and 3B include dual ring networks, each with a clockwise ring (illustrated by solid black arrows) and an anticlockwise ring (illustrated by white arrows with a black outline).

In some embodiments, at least one processor node of the ECaMS may be configured to receive sensor data generated by at least one sensor, and to transmit data packets via the ring network; in this way the sensor data may be made available throughout the processor nodes forming the ECaMS. The at least one sensor may form part of the ECaMS, may be separate from but connected to the ECaMS, or may be a mixture of sensors forming part of the ECaMS and separate sensors. In some embodiments, the method may further comprise connecting the expansion unit to at least one sensor unit such that, in use, the expansion unit is configured to receive sensor data from the at least one sensor unit. Where the expansion unit is connected to at least one sensor unit, the expansion unit may be further configured to to receive sensor data generated by the at least one sensor unit, and to transmit data packets to the processor nodes of the ECaMS (for example, using a ring network where one is present). Additionally or alternatively, the expansion unit may be connected to one or more processor unit(s) separate from the ECaMS, wherein the expansion unit may be configured to receive discrete input/output signals and/or bi-directional data transmissions from the processor unit.

Where the data packets are transmitted between processor nodes using the ring network, the processor node that initially transmits the data packets using the ring network may be configured to include a node identifier in the data packets, wherein the node identifier may indicate that the packets have originated from (as in, have been initially transmitted into the ring network) by that processor node. Use of node identifiers in this way may allow data packets containing errors to be traced to a processor node, such that the source of the errors may potentially be detected and rectified. In embodiments where expansion unit(s) receive sensor data, a processor node connected to the expansion unit may be configured to include a node identifier of itself in the data packets.

Use of of node identifiers as discussed above may also help prevent data contention. In some embodiments, at least one processor node within the ECaMS (potentially all of the processor nodes) may be configured, when receiving one or more data packets via the ring network, to determine whether the one or more data packets include the node identifier of that node. Where a processor node detects a node identifier for itself, the processor node may be further configured to delete the data packets including said node identifier. Alternatively, where a processor node determines that the one or more data packets do not include the node identifier, or include a node identifier for another processor node, the processor node may be further configured to retransmit the data packets. By selectively deleting data packets in this way, old data (that has already circled around the ring network) may be eliminated to avoid data packets endlessly looping through the ring network and band contention may thereby be avoided.

In addition or alternatively to input unit connections (such as sensor connections), in some embodiments the method may further comprise connecting expansion unit(s) to at least one output unit such that, in use, expansion units may be configured to transmit data to the at least one output unit. In this way, the expansion units may be used to address provisioning deficits which require outputs to other units and/or actions to be taken to adjust engine parameters. The exact nature of the output units may be determined based on specific system requirements; by way of example, expansion units may be connected to output units that comprise some or all of: data collection units; motor units (such as torque motors); bleed valves; sensor excitation outputs; ignitors; actuators; solenoids; comms outputs; and other discrete outputs.

In some embodiments, the processor nodes of the ECaMS may be divided into at least a first portion and a second portion (each portion comprising at least one processor node); where the ECaMS comprises only two processor nodes, the portions may comprise a single one of these two processor nodes each. Where the ECaMS comprises more than two processor node, the processor nodes may be divided between the two portions. Typically, although not exclusively, the processor nodes may be divided approximately equally between the two portions, by way of example, where the ECaMS comprises four processor nodes, two of the processor nodes may be included in each of the two portions. A first portion of the processor nodes may be used to provide control functionality, while a second portion of the processor nodes may be used to provide protection functionality. Control functions may include, for example, VSV (variable stator vane) actuator control, engine igniter control, fuel control, and so on. Protection functions may include, for example, engine surge prevention, flame out prevention, and so on. As discussed above, for some ECaMS applications (such as aeronautical engines) it is desired to provide segregation between control and protection functions, such that any potential errors or failures in control systems do not impact safety critical protection functions. The segregation between the two functions means that interactions between the two functions are kept to a minimum; by way of example, the only signals that may cross partitions between control and protection functions may be power and communication signals between processors (and these signals may be carefully regulated to avoid any error or failure propagation between systems).

Where segregation between portions of processor nodes of an ECaMS is used, the output ICs of processor nodes within a portion may communicate with one another; however as discussed above the processors of the processor nodes may not communicate directly. The limited signalling that passes between portions (that is limited processor communications) may pass via the acquisition ICs. In some embodiments, where the processor nodes are segregated into two or more portions, any expansion units connected to the ECaMS will typically be connected to only one of the portions, that is, will not simultaneously be connected to plural portions. In this way, expansion units may be connected in a way that does not interfere with segregation.

In some embodiments, the ICs in the processor nodes and in the expansion units (that is, the acquisition ICs and output ICs) may be Field Programmable Gate Arrays (FPGAs). FPGAs may be particularly well suited to use in the ECaMS units. Other forms of IC such as Application Specific Integrated Circuits (ASICs), System on a Chips (SoCs), Complex Programmable Logic Devices (CPLDs) and Application Specific Standard Products (ASSPs) may additionally or alternatively be used. In some embodiments, different processor nodes within ECaMS may use different types of ICs; the choice of IC(s) used may be primarily determined based on the specific needs of the system.

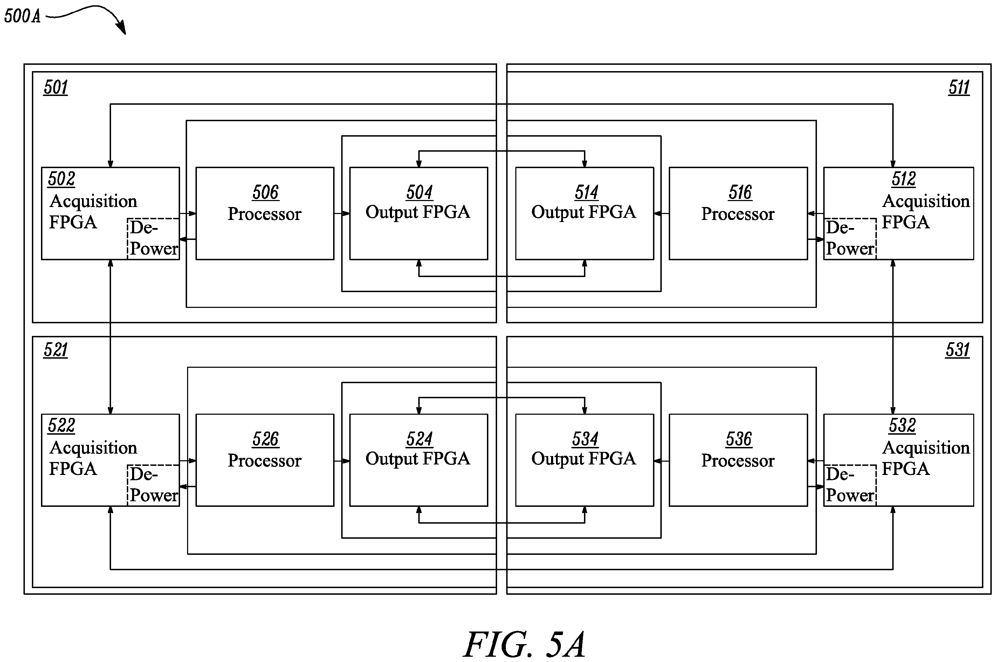

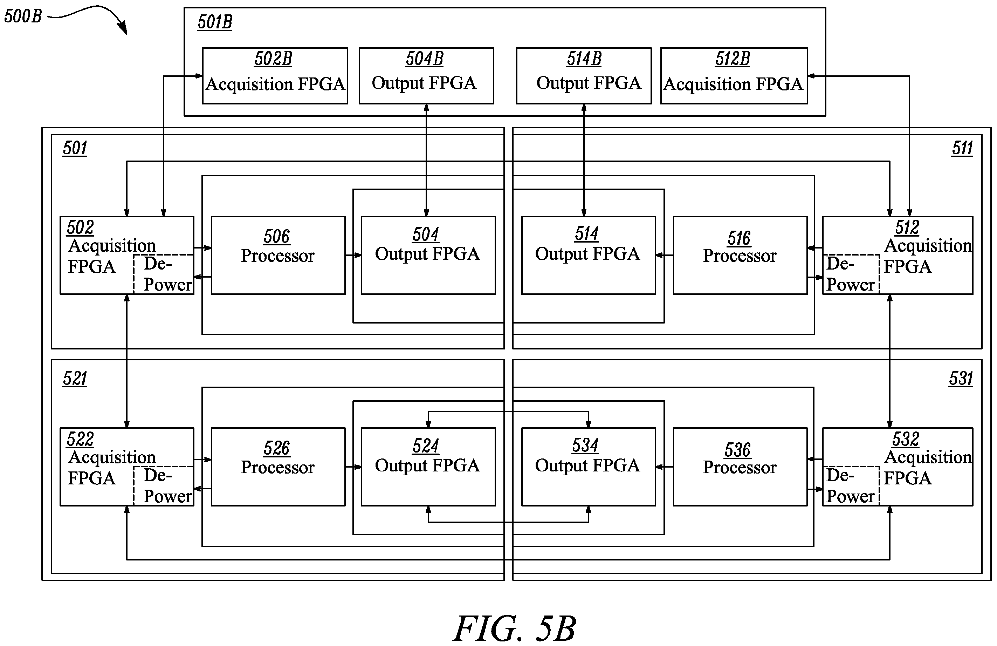

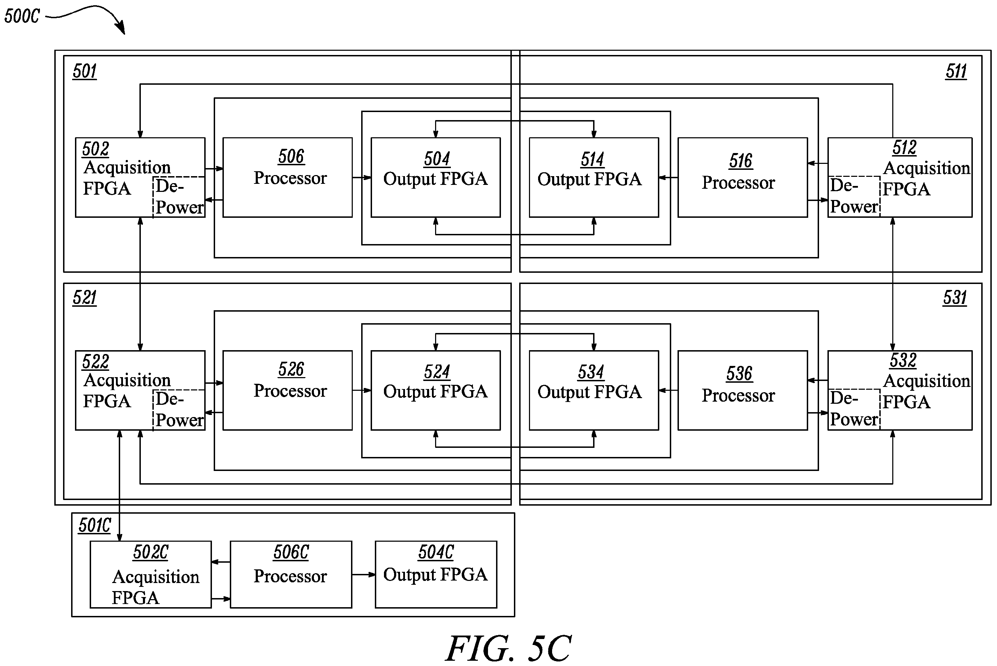

**Figure 5A** is a schematic diagram of connections within an ECaMS in accordance with embodiments. **Figure 5B** and **Figure 5C** are schematic diagrams of the same ECaMS following the addition of expansion units. The ECaMS shown in Figure 5 includes 4 processor nodes, each of which has an acquisition IC, processor and output IC. The ECaMS includes processor nodes 501, 511, 521 and 531. The acquisition ICs in the Figure 5 ECaMS are 502, 512, 522 and 532. The processors in the Figure 5 ECaMS are 506, 516, 526 and 536. The output ICs in the Figure 5 ECaMS are 504, 514, 524 and 534. All of the ICs shown in Figure 5 are FPGAs.

Figure 5 shows an ECaMS (in this example, EEC), in accordance with embodiments. The processor nodes are divided into two portions, with processor nodes 501 and 511 used to provide control functionality (thereby defining the first, control, portion), and processor nodes 521 and 531 used to provide protection functionality (thereby defining a second, protection, portion). Where segregation of control and protection functions is desired, separate communication channels may be used for the two functions, with only power and communication signals between processors crossing the segregation between functions. The FPGAs may be used to acquire signals or provide sensor excitations or switching output states on demand from the processor. As shown in Figure 5, the connections between processor nodes are via the acquisition ICs, and there are also connections between output ICs within (rather than between) the two portions. The processors 506, 516, 526 and 536 are only connected to other components within the processor nodes; accordingly, configuration alterations for the ECaMS may not require significant software updates and the versatility of the system is improved.

Where it is desired to address a provisioning deficit, for example to increase in I/O provisions; this may be effected by addition of units without exceeding a physical limit on how large ECaMS systems may be. Continuing with the example of aeronautical engines, the physical limit may be dictated by the diameter of the fan case, sizes of PCBs that can be efficiently manufactured, weight limits, and so on. Both Figure 5B and Figure 5C show examples of systems in which expansion units have been connected to the processor nodes of the ECaMS. In Figure 5B, expansion unit 501B has been added as an extra node within the existing ring network between the processor nodes. Expansion unit 501B is connected to existing processor nodes 501 and 511 (in this example embodiment, the connections between processor nodes 501 and 511 have been removed, although these connections may be retained in some embodiments). Expansion unit 501B comprises additional acquisition FPGAs 502B and 512B, and output FPGAs 504B and 514B; the expansion unit can therefore provide additional I/O capability to the ECaMS. In Figure 5C expansion unit 501C has been added as a spur to the existing ring network between the processor nodes. Expansion unit 501C is connected to existing processor node 521; all signals to and from expansion unit 501C therefore pass through processor node 521. Expansion unit 501C comprises an additional acquisition FPGA 502C, output FPGA 504C, and processor 506C. Expansion unit 501C may therefore provide additional processing and I/O capabilities, for example, to receive sensor readings, process these readings and then pass to the processor nodes of the ECaMS.

Through linking processor nodes within ECaMS via ICs rather than via processors, embodiments may provide versatile and adaptable ECaMSs that can be used within a range of engine types. Embodiments may support simple modification of the ECaMS where circumstances dictate with minimal or no software updating required to effect modifications. In embodiments, by connecting the processor nodes of the ECaMS using direct connections between ICs, the adaptability and versatility of the ECaMS may be improved. In some embodiments, use of a ring network to connect the processor nodes (via acquisition ICs) further improves the adaptability and versatility of the ECaMS, in particular by simplifying the process of modifying the ECaMS configuration where desired. In particular, use of dual ring networks may provide robustness, allowing communications between processor nodes to be routed around malfunctioning processor nodes. In some embodiments, portioning and segmenting of the processor nodes may reduce the risk of errors or failures in the control functionality impacting the protection functionality, which may be of particular use in safety critical applications.

Except where mutually exclusive, any of the features may be employed separately or in combination with any other features and the disclosure extends to and includes all combinations and sub-combinations of one or more features described herein.

## Claims

1. A method for modifying an Engine Control and Monitoring System, ECaMS, for an engine,
the method comprising:
identifying a provisioning deficit in the ECaMS, wherein the ECaMS comprises a first processor node and a second processor node: the first processor node comprising a first acquisition integrated circuit a first output integrated circuit, and a first processor; and the second processor node comprising a second acquisition integrated circuit, a second output integrated circuit, and a second processor, wherein the first acquisition integrated circuit is connected directly to the second acquisition integrated circuit; and
connecting an expansion unit to the ECaMS,
wherein the expansion unit comprises one or more expansion unit integrated circuits, said one or more expansion unit integrated circuits being connected to one or more integrated circuits of the ECaMS.

2. The method of claim 1, wherein the ECaMS further comprises a third processor node and a fourth processor node: the third processor node comprising a third acquisition integrated circuit, a third output integrated circuit, and a third processor; and the fourth processor node comprising a fourth acquisition integrated circuit, a fourth output integrated circuit, and a fourth processor, wherein the first acquisition integrated circuit, second acquisition integrated circuit, third acquisition integrated circuit and fourth acquisition integrated circuit are connected via a ring network.

3. The method of claim 2, wherein the expansion unit is connected to the ECaMS as a spur to the ring network, such that the connecting of the expansion unit to the ECaMS comprises connecting one or more expansion unit integrated circuits to one or more integrated circuits within a single processor node of the ECaMS.

4. The method of claim 3, wherein the connecting comprises connecting one or more expansion unit acquisition integrated circuits to one or more acquisition integrated circuits within the single processor node of the ECaMS.

5. The method of any of claims 3 and 4, wherein the connecting comprises connecting one or more expansion unit output integrated circuits to one or more output integrated circuits within the single processor node of the ECaMS.

6. The method of claim 2, wherein the expansion unit is connected to the ECaMS as a node within the ring network, such that the connecting of the expansion unit to the ECaMS comprises connecting the one or more expansion unit integrated circuits to integrated circuits within two processor nodes of the ECaMS.

7. The method of claim 6, wherein the connecting comprises connecting one or more expansion unit acquisition integrated circuits to acquisition integrated circuits within the two processor node of the ECaMS.

8. The method of any of claims 6 and 7, wherein the connecting comprises connecting one or more expansion unit output integrated circuits to output integrated circuits within the two processor node of the ECaMS.

9. The method of any of claims 2 to 8, wherein the ring network is a dual ring network comprising a clockwise ring and anticlockwise ring.

10. The method of any preceding claim, wherein the method further comprises:
connecting the expansion unit to at least one sensor unit such that, in use, the expansion unit is configured to receive sensor data from the at least one sensor unit; and/or
connecting the expansion unit to a processor unit such that, in use, the expansion unit is configured to receive discrete input/output signals and/or bi-directional data transmissions from the processor unit.

11. The method of claim 10, wherein the expansion unit is configured to receive sensor data generated by the at least one sensor unit, and to transmit data packets to the processor nodes of the ECaMS.

12. The method of claim 11, wherein the processor node connected to the expansion unit is configured to include a node identifier of itself in the data packets.

13. The method of any preceding claim, wherein the method further comprises connecting the expansion unit to at least one output unit such that, in use, the expansion unit is configured to transmit data to the at least one output unit.

14. The method of claim 13, wherein the output unit is a data collection unit, or
wherein the output unit is a motor unit.

15. The method of any preceding claim, wherein the ECaMS is an Electrical Engine Controller, EEC.
